(19) **Europäisches Patentamt / European Patent Office / Office européen des brevets**

(11) **EP 1 303 572 B1**

(12) **EUROPEAN PATENT SPECIFICATION**

(45) Date of publication and mention
of the grant of the patent:
**11.07.2007 Bulletin 2007/28**

(51) Int Cl.:
*C09K 3/32* (2006.01)      *B01J 20/02* (2006.01)
*B01J 20/12* (2006.01)

(21) Application number: **00972558.1**

(22) Date of filing: **19.07.2000**

(86) International application number:
**PCT/CY2000/000003**

(87) International publication number:
**WO 2002/006419 (24.01.2002 Gazette 2002/04)**

(54) **POROUS AND MAGNETIC, INORGANIC-BASED COMPOSITE MATERIAL USED AS SORBENT FOR CLEANING WATER AND THE ENVIRONMENT FROM OIL SPILL**

VERWENDUNG MAGNETISCHER, PORÖSER ANORGANISCHER MATERIALIEN ALS SORPTIONSMITTEL ZUR REINIGUNG VON WASSER UND DER UMWELT VON AUSGELAUFENEM ÖL

MATERIAU COMPOSITE A BASE INORGANIQUE, POREUX ET MAGNETIQUE UTILISE EN TANT QUE SORBANT POUR NETTOYER L'EAU ET L'ENVIRONNEMENT D'UNE NAPPE D'HYDROCARBURES

(84) Designated Contracting States:
**AT BE CH CY DE DK ES FI FR GB GR IE IT LI LU MC NL PT SE**

(43) Date of publication of application:
**23.04.2003 Bulletin 2003/17**

(73) Proprietor: **Ecomag Technologies Limited**
**1105 Nicosia (CY)**

(72) Inventor: **Christodoulou, Neofytou Christodoulos**
**2324 Nicosia (CY)**

(74) Representative: **Doble, Richard George Vivian**
**Langner Parry**
**52-54 High Holborn**
**London, WC1V 6RR (GB)**

(56) References cited:
**WO-A-97/07900**        **US-A- 3 382 170**
**US-A- 5 035 804**        **US-A- 5 352 517**
**US-A- 5 603 983**

**Description**

**1. Introduction**

As of today, the methods used for oil spill cleaning are mechanical and chemical methods.

The mechanical methods employ booms to surround the oil spill and special pumps and skimmers to recover the bulk of the oil. This method is messy, time consuming and inefficient. Although it can help remove a major part of the oil, still a large portion remains on the surface of the waters, which by the time reaches the coast causing unrecoverable environmental pollution. To remove the remaining of the oil, special sorbing materials are used (usually based on polypropylene). These materials are good but they are difficult to be applied on the oil spill and difficult to recover from the water. Also, they are quite expensive.

The chemical methods employ spraying of chemical dispersants or detergents in order to break the oil spill into very small drops which sink in the bulk of the water and which will "hopefully" biodegrade by time which could be months or years. Usually, the heavy components of the oil sink in the bottom of the waters causing a permanent marine pollution. The disadvantage of the use of the chemical methods is that the oil essentially remains and pollutes the waters for long times causing unpredictable damages to the environment and to the ecology systems around the pollution. In addition, the chemicals used can be considered to: be an additional pollutant.

Other techniques, such as in situ combustion of the oil, can cause other atmospheric pollution problems ($SO_2$, CO, $CO_2$, C, etc.). Also, the heavy constituents of the oil consolidate and sink at the bottom of the waters causing permanent pollution.

As a consequence of the partial efficiency of the existing mechanical methods, the partial efficiency and burdening of pollution by chemical methods, the waters are being day by day more polluted, and there is an urgent need of developing new effective sorbent materials and methods to combat oil spills.

In order to minimize the pollution from oil spills, one has to physically remove almost the entire amount (nearly 100%) of oil from the waters. This has to be done in an efficient and cost effective way which requires new materials and new recovery methods.

US 5,603,983 discloses porous inorganic matrix materials having a magnetic coating and porous membranes of such materials.

US 5,035,804 discloses the use of expanded perlite in the removal of oil from water.

The present invention provides particulate composite material for absorbing oil from oil spills, the material comprising a porous low-density mineral component and a magnetic component in an amount sufficient to make the particulate material magnetically recoverable from an oil spill, the material being characterised by an apparent density of 323 kg/m$^3$ to 25 kg/m$^3$.

Among other uses, the use of such membranes for removal of hydrocarbons from waste water is disclosed.

Such particulate material can be applied easily on the oil spill, and immediately sorbs the oil forming a cohesive floating mixture of oil trapped in the pores of the solid material, which can be separated from the waters and the environment by magnetic separation. For example, one can use an electromagnet or any magnetic system coming in close distance or contact with the mixture, lifting it and store it on a vessel or in a storage container. Other mechanical methods, for example, "fishing" the mixture in nets can also be used.

A preferred embodiment of the new material is named herein "EcoMag" and it has been developed to exhibit the following properties:

**1)** It is chemically based on inorganic materials (not copolymers or other organic materials) which are inert to the environment (waters, ground, air) and are common earth constituents.

**2)** It is porous in order to sorb and trap the oil.

**3)** It is magnetic in order to be attracted by a magnet (electromagnet or permanent magnet) and to be able to be separated by magnetic means.

**4)** It is by itself oleophilic (not with the use of any surfactants) in order to attract and sorb oil.

**5)** It is very light in order, even after sorbing the oil, to float on the surface of the waters.

**6)** The material is usually used in the form of particles, which attract magnetically each other (the degree of magnetic attraction can be controlled). Therefore, after sorbing the oil, the "magnetically connected" particles form cohesive mixtures of "floating islands" which prevent the spreading of the oil spill and retaining its size.

**7)** By applying the material on the crude oil, it sorbs the crude oil and holds or, to the heavier components. Therefore, as natural evaporation of the lighter components of the crude oil occurs, the heavier components (asphalt) are prevented from sinking at the bottom of the sea, an event which causes unrecoverable marine pollution.

**8)** The oil can be recovered from the mixture by centrifugation or by solvent extraction.

**9)** The material-oil mixture can be directed for burning, for example in the cement industries, the solid material remaining as inorganic ash which can co-participate in the final cement product of it can be disposed off in the fields (it is inert to the ground).
10) The material can be produced and applied on the oil spill in situ, for example, on the oil spill combating vessel.
11) The cost of the material is very low because of the low cost of the raw materials and the manufacturing cost.

It is brought to the attention that, a material named "CleanMag" with similar sorption and magnetic properties is disclosed in WO98/17387. There is though a tremendous difference between "CleanMag" and" EcoMag". The major porous components of "Clean Mag" which sorb the oils are organic copolymers whereas the major porous component of "EcoMag" is inorganic matter. Therefore, their major components which sorb the oils are completely different materials. Also, they completely differ in their production process. In order to produce "EcoMag", temperatures in excess of 800 C are needed. At such temperatures, "Clean Mag" melts and irreversibly deteriorates by burning due to its organic components. Therefore the two materials are completely different.

Although both materials (CleanMag and EcoMag) can be used for similar applications (oil spill cleaning by magnetic separation), the materials' compositions and the production process of the two materials ("CleanMag" and "EcoMag") are different. Also, a major merit of "EcoMag" is that its final cost is much less than that of "CleanMag" due to the much lower raw materials' cost and the simple, cheap production cost. Also, the organic nature of "CleanMag" poses problems for disposal (or atmospheric pollution if burnt), whereas "EcoMag" is friendly to the environment because its components are earth's inorganic constituents.

In another aspect the invention provides a method of making expanded particulate composite material for absorbing oil from oil spills, the method comprising flash heating precursor material comprising unexpanded perlite and a magnetic component in an amount sufficient to make the resulting expanded particulate composite material magnetically recoverable from an oil spill and having an apparent density of 323 $kg/m^3$ to 25 $kg/m^3$.

### 2. The "EcoMag" final product

EcoMag is an inorganic-based composite consisted of a porous matrix component and a magnetic material component.

### 2.1 Porous matrix component

The porous matrix material is chemically inorganic and consists of several metals (Silicon, Aluminum, Potassium, Sodium, Iron, Calcium, Magnesium, other metallic traces) in the form of pure oxides/silicates and/or in the form of oxide/silicate mixtures, in the crystalline and/or amorphous state.

The porosity fraction $\left( \dfrac{\text{volume of voids}}{\text{vol. of voids + vol. of solids}} \right)$ of the porous matrix can be estimated by the formula,

$$\text{porosity fraction} = \left(1 - \frac{d_p}{d_s}\right),$$

where, $d_p$ is the apparent $\left( \dfrac{\text{mass of solids}}{\text{volume of (solids + voids)}} \right)$ density of the porous matrix, and $d_s$ is the bulk $\left( \dfrac{\text{mass of solids}}{\text{volume of solids}} \right)$ density of the matrix (porous-free matrix).

The bulk density of the matrix ($d_s$) is usually between 2000$kg/m^3$ and 2500$kg/m^3$.

The porous matrix is considered to be the only component of EcoMag which sorbs the oil. The magnetic material component may sorb small amounts of oil but they are considerably less than that of the porous matrix. It can be shown that the "sorption capacity" of the porous matrix can be calculated from the formula:

$$M_v = \frac{\text{Volume of oil}}{\text{Mass of porous matrix}} = \left(\frac{1}{d_p} - \frac{1}{d_s}\right),$$

or

$$M_m = \frac{\text{Mass of oil}}{\text{Mass of porous matrix}} = d_o \left( \frac{1}{d_p} - \frac{1}{d_s} \right),$$

where $d_o$ is the oil density.

Assuming $d_s = 2100 kg/m^3$, $d_p = 100 kg/m^3$ and $d_o = 800 kg/m^3$, the "sorption capacity" ($M_v$) is estimated to be $9.5 \times 10^{-3} m^3/kg$ or 9.5 liters of oil per 1kg of porous matrix. The "sorption capacity" ($M_m$) is also estimated to be 7.6kg of oil per 1kg of porous matrix. If $d_p = 200 kg/m^3$, the "sorption capacity" is estimated to be $M_v = 4.5$ liters and $M_m = 3.6 kg$ of oil per 1 kg of porous matrix.

There is a practical upper limit to the apparent density of the porous matrix ($d_p$) if it is to be used for waterborne oil spill cleaning. The porous material (without any magnetic material) together with the sorbed oil has to float, and therefore, the density of the mixture (porous matrix + oil) has to be less than that of the water (about $1000 kg/m^3$). In order to meet this "floating criterion" it can be shown that the upper limit to the apparent density of the porous matrix should be:

$$d_p = \frac{1000 - d_o}{1 - \frac{d_o}{d_s}}$$

For an oil density $d_o = 800 kg/m^3$ and a matrix bulk density $d_s = 2100 kg/m^3$, the upper limit for the apparent density of the porous matrix is estimated to be $d_p = 323 kg/m^3$.

For heavy oils, with $d_o = 950 kg/m^3$ and $d_s$ between $2000\text{-}2500 kg/m^3$, the upper limit of the $d_p$ should be $95\text{-}80 kg/m^3$, accordingly.

Therefore, it is desirable for the apparent density ($d_p$) of the porous matrix to be as low as possible. Practically, it is found that the lower apparent density ($d_p$) which can be achieved is $25 kg/m^3$ due to processing limitations.

The pores of the porous matrix are open cell type in order to sorb the oil. The presence of some closed cell type pores is not deterrent for the sorbing properties of the final product. The sizes of the pores are preferably between $1 \times 10^{-9} m$ and $3 \times 10^{-3} m$. Usually, there is a broad distribution of the pores sizes which does not affect seriously the sorption properties of the porous matrix. The problem arises only when this distribution is shifted to the higher sizes of the pores ($3 \times 10^{-3} m$). The problems in such a case are related to the fact that the sorbed oil is not strongly trapped in the pores and can start dripping out of the porous matrix, an event which is undesirable.

The porous matrix is produced in the form of porous particles with a particle size preferably between $0.2 \times 10^{-3} m$ to $20 \times 10^{-3} m$ in average diameter (assuming nearly spherical particles). The shape of the particles can be irregular (any shape) and it is non-important for the final sorbing properties of EcoMag.

## 2. 2 Magnetic material component

The magnetic material, used to form the composite together with the porous matrix, is necessary to be ferromagnetic and/or ferrimagnetic at least in the temperature range of -30°C to 50°C. In practical terms, this means that the magnetic material is necessary to be attracted by a magnetic field at least in the temperature range of -30°C to 50°C, temperature conditions in which one may have to combat oil spills. It is also possible that the magnetic material can be attracted in other temperatures out of this range. Magnetic materials which are not ferromagnetic and/or ferrimagnetic in the temperature range of -30°C to 50°C are excluded.

Magnetic materials suitable for this purpose are iron (Fe) metal and/or iron alloys (containing at least 50 wt% Fe), Iron(II) Oxides ($FeO_x$, x is about 1), Iron (III) Oxides ($\gamma\text{-}Fe_2O_3$ maghemite, $\alpha\text{-}Fe_2O_3$ hematite), Iron Hydroxides ($Fe(OH)_2$ or $Fe(OH)_3$), $Fe_3O_4$ magnetite, Ferrites (such as Sr-ferrite and Ba-ferrite), other Iron, Cobalt and Nickel-based metallic alloys (such as RE-Fe (Co, Ni)-B (C), RE Co(Fe, Ni) alloys, where, RE=La, Ce, Pr, Nd, Sm, Y, Dy, Tb, Gd, Eu, Yb, Ho). From the final cost point of view, Fe, $\gamma\text{-}Fe_2O_3$ maghemite, $Fe_3O_4$ magnetite, Sr ferrite, Ba-ferrite, other ferrites, and/or mixtures of them are the most suitable. Magnetic metal alloys containing RE metals may be used only in special occasions where cost is not an important issue.

The magnetic material is used in the form of particles with a particle sizes of between $1 \times 10^{-9} m$ to $10 \times 10^{-3} m$ in average diameter (assuming nearly spherical particles). The shape of the particles can be irregular (any shape) and it is non-important for the final sorbing and magnetic properties of EcoMag. The magnetic material is usually of very low porosity (nearly porous-free)

The magnetic properties of various suitable magnetic materials are listed in Table 1. It is shown that, the Curie Temperatures (temperature at which a material looses its magnetization) of such magnetic materials are far above the room temperature in order to be of practical used. The saturation magnetization ($M_s$) together with the remanent magnetization ($M_r$) give a measure of the "magnetic separation ability" of the mixture (EcoMag + oil) by magnetic separation methods. This is because the magnetic attraction force is approximately proportional to the materials' magnetization. The coercive magnetic field ($H_c$) together with the remanent magnetization ($M_r$) give a measure of the "degree of cohesiveness" between the EcoMag particles. The EcoMag particles which contain magnetic materials with high $H_c$ and $M_r$ behave as small permanent magnets which attract each other, binding them together in a cohesive manner.

### Table 1

| | Properties of Magnetic Materials | | | | |
|---|---|---|---|---|---|
| Magnetic Materials | Saturation Magnetization $M_s$ (emu/kg) | Remanent Magnetization , $M_r$ (emu/kg) | Coercive Magnetic Field $H_c$ (Oe) | Curie Temperature $T_c$ (°C) | Density d (kg/m$^3$) |
| Fe | $2 \times 10^5$ | 0 | 0.00001-1 | 760 | 7870 |
| $\gamma$-Fe2O$_3$ | $0.75 \times 10^5$ | $0.01 \times 10^5$ | 1-100 | 685 | 4900 |
| Fe$_3$O$_4$ | $0.85 \times 10^5$ | $0.10 \times 10^5$ | 10-300 | 585 | 5100 |
| Sr-ferrite | $0.70 \times 10^5$ | $0.65 \times 10^5$ | 200-5000 | 470 | 5200 |
| Nd$_2$Fe$_{14}$B | $1.7 \times 10^5$ | $1.5 \times 10^5$ | 1000-15000 | 310 | 7500 |

### 2.3 The EcoMag Composite

The EcoMag composite consists of porous matrix particles and magnetic material particles. Usually, the appearance of EcoMag is in the form of one porous matrix particle carrying one or more magnetic material particles. EcoMag is naturally oleophilic because its main components (matrix and magnetic materials) are oleophilic themselves.

EcoMag can be characterized by its "sorption capacity", its "magnetic separation ability" and its "degree of cohesiveness". The effects of the increase of the wt% concentration of the magnetic material on EcoMag are:

a) The EcoMag's "sorption capacity" drops due to the decrease of the porous matrix.
b) The EcoMag's "magnetic separation ability", on the one hand drops due to the increase in EcoMag's apparent density and, on the other hand increases due to the larger magnetic attractive force induced on EcoMag by the magnetic s eparation system.
c) The EcoMag's "degree of cohesiveness" enhances due to the larger magnetic attractive force induced among EcoMag particles.

The magnetic material component adds to the apparent density of EcoMag. There is an upper limit to the wt% concentration of the magnetic material, if EcoMag is to be used for waterborne oil spill cleaning. This is due to the "floating criterion" which requires the density of EcoMag carrying the sorbed oil to be less than the density of the water (1000kg/m$^3$) in order to float. If the density of the magnetic material (which it is assumed to be free of pores) is $d_m$, the upper limit wt% concentration of the magnetic material (for the overall density of "EcoMag+sorbed oil" to be less than 1000kg/m$^3$) can be estimated as follows: Assuming a wt% concentration of the magnetic material in EcoMag, then the (100-wt%) is the weight percent of porous matrix in EcoMag. The "sorption capacity" ($M_m$) (mass of oil sorbed per kg of porous matrix) of porous matrix was shown before to be:

$$M_m = d_o \left( \frac{1}{d_p} - \frac{1}{d_s} \right)$$

For the "floating criterion" to be met,

$$\frac{\text{Mass of porous matrix+Mass of magnetic material+Mass of oil}}{\text{Volume of magnetic material+apparent volume of porous matrix}} < 1000 \text{kg/m}^3$$

Therefore,

$$\frac{100 + (100 - wt\%) \times M_m}{\frac{wt\%}{d_m} + \frac{(100 - wt\%)}{d_p}} < 1000 kg/m^3$$

or after mathematical manipulations, the upper limit of the wt% concentration of the magnetic material in EcoMag has to be:

$$wt\% = \frac{\frac{1}{d_p} - \frac{d_o}{1000}(\frac{1}{d_p} - \frac{1}{d_s}) - \frac{1}{1000}}{\frac{1}{d_p} - \frac{d_o}{1000}(\frac{1}{d_p} - \frac{1}{d_s}) - \frac{1}{d_m}} \times 100\%$$

Therefore, the upper limit wt% of magnetic material depends on the apparent density of the porous matrix ($d_p$), the bulk density of the matrix ($d_s$), the density of the magnetic material ($d_m$) and density of the oil ($d_o$). Assuming a porous matrix of $d_p$=100kg/m$^3$ and $d_s$=2100kg/m$^3$, an oil of $d_o$=800kg/m$^3$ and a magnetic material of $d_m$=5200kg/m$^3$ (for example for ferrites), the wt% upper limit for the magnetic material to meet the "floating criterion" is estimated to be 63.1 wt%. If $d_p$=300kg/m$^3$, this upper limit becomes 5.6 wt%.

The lower limit of the wt% concentration of the magnetic material is determined by the desired EcoMag's "magnetic separation ability" (MSA). This is related to the fact that the magnetic material has to be able to induce (in the presence of a magnetic field of the magnetic separation system) an attractive force able to lift the weight of the mixture of EcoMag with the sorbed oil. The "sorption capacity" of EcoMag can be shown to be:

$$SC_v = \frac{Volume \ of \ oil}{Mass \ of \ EcoMag} = (1 - \frac{wt\%}{100})(\frac{1}{d_p} - \frac{1}{d_s})$$

$$SC_m = \frac{Mass \ of \ oil}{Mass \ of \ EcoMag} = d_o(1 - \frac{wt\%}{100})(\frac{1}{d_p} - \frac{1}{d_s})$$

The "magnetic separation ability" (MSA) of EcoMag is defined as the mass (weight) of the mixture "EcoMag+oil" to the EcoMag's original mass (weight) and becomes:

$$MSA = [\ 1 + d_o(1 - \frac{wt\%}{100})(\frac{1}{d_p} - \frac{1}{d_s})\ ]$$

The lower limit of wt% concentration of the magnetic material in EcoMag in order to meet the "MSA criterion" has to be:

$$wt\% = [\ 1 - \frac{MSA - 1}{d_o(\frac{1}{d_p} - \frac{1}{d_s})}\ ] \times 100\%$$

For example, the wt% concentration of the magnetic material present in EcoMag able to develop an attractive magnetic force at least equal to MSA times its original weight (MSA=5), assuming, EcoMag with $d_p$=100kg/m$^3$, $d_s$=2100kg/m$^3$, oil density of $d_o$=800kg/m$^3$, is estimated to be 47.5wt%. If $d_p$=150kg/m$^3$, this value becomes 19.2wt%.

Therefore, the wt% concentration of the magnetic material in EcoMag is bounded by

$$wt\% = \frac{\dfrac{1}{d_p} - \dfrac{d_o}{1000}\left(\dfrac{1}{d_p} - \dfrac{1}{d_s}\right) - \dfrac{1}{1000}}{\dfrac{1}{d_p} - \dfrac{d_o}{1000}\left(\dfrac{1}{d_p} - \dfrac{1}{d_s}\right) - \dfrac{1}{d_m}} \times 100\% \text{ (upper limit)}$$

in order to meet the "floating criterion" and by

$$wt\% = \left[1 - \frac{MSA - 1}{d_o\left(\dfrac{1}{d_p} - \dfrac{1}{d_s}\right)}\right] \times 100\% \text{ (lower limit)}$$

in order to meet the **"MSA criterion".**

For a given magnetic separation system, the magnetic attraction force per kg of EcoMag (F [=] N/kg) is approximately proportional to the magnetization (M [=] emu/kg) of EcoMag's particles: F=kM, where k [=] N/emu, is a proportionality constant which mostly depends on the magnetic separation system and can be determined experimentally.

The magnetization (M) of EcoMag is equal to the magnetization of the magnetic material in EcoMag: $M = \dfrac{wt\%}{100} M_s$, where, $M_s$ [=] emu/kg is the saturation magnetization of the magnetic material (see Table 1).

Therefore, for the force to be able to lift the weight of EcoMag it can be written that, $k\left(\dfrac{wt\%}{100} M_s\right) = (MSA)g$, where g is the acceleration of gravity (of about 9.8N/kg). Combining this equation with $MSA = \left[1 + d_o\left(1 - \dfrac{wt\%}{100}\right)\left(\dfrac{1}{d_p} - \dfrac{1}{d_s}\right)\right]$, one can express the lower limit of wt% concentration of the magnetic material as:

$$wt\% = \frac{1 + d_o\left(\dfrac{1}{d_p} - \dfrac{1}{d_s}\right)}{\dfrac{kM_s}{g} + d_o\left(\dfrac{1}{d_p} - \dfrac{1}{d_s}\right)} \times 100\%,$$

where g=9.8N/kg

Therefore, It becomes clear that magnetic materials with higher saturation magnetization ($M_s$), are able to develop the same force in smaller quantities, and smaller wt% concentrations of magnetic material are needed. From Table 1, it can be seen that, Fe ($M_s$=2x10^5emu/kg) can be used in lower concentrations than the other magnetic materials such as iron oxides of ferrites. For a given magnetic separation system of k=1 x10^-2N/emu, EcoMag with $d_p$=100kg/m^3, $d_s$=2100kg/m^3, oil density of $d_o$=800kg/m^3, and Fe particles ($M_s$=2x10^5emu/kg, $d_m$=7870kg/m^3), the lower limit for the wt% concentration of the magnetic material in EcoMag is estimated to be 4.07%. At the same time, the MSA is 8.31 and the estimated upper limit for the wt% concentration of the magnetic material in EcoMag is 61.3%. If Sr-ferrite is to be used ($M_s$=0.7x10^5emu/kg, $d_m$=5200kg/m^3), the lower limit for the wt% concentration of the magnetic material in EcoMag is estimated to be 10.90%. At the same time, the MSA is 7.79 and the estimated upper limit for the wt% concentration of the magnetic material in EcoMag is 63.1 %.

If the EcoMag is going to be used in oil spills formed on the ground and/or other solid surfaces, no "floating criterion" has to be met and therefore, there is no strict upper limitation to its wt% concentration of the magnetic material.

Another important property of EcoMag is the "degree of cohesiveness" among the EcoMag particles. This is an important property because the EcoMag particles with the sorbed oil attract each other forming large floating masses which become less mobile and hold on to the oil, preventing the spreading of the oil spill especially when there are waves in the sea. The formation of large floating masses is desirable, adding to the magnetic separation ability and effectiveness of the separation method. The "degree of cohesiveness" depends on the permanent magnetic properties of the magnetic material used in EcoMag. The permanent magnetic properties of the magnetic material are the coercive magnetic force ($H_c$) and the remanent magnetization ($M_r$) (see Table 1). Ferrites, such as Sr-ferrites can give a high "degree of cohesiveness" whereas iron particle which exhibit high MSA can give almost none. Therefore, a mixture of ferrite and iron particles could give a reasonable "degree of cohesiveness" and MSA.

Another consideration is the cost ("cost criterion") of the magnetic materials. Ferrites are more expensive than iron which is more expensive than magnetite. Therefore it might be desirable to increase the MSA of EcoMag by substituting ferrite ($M_s=0.7\times10^5$emu/kg) by magnetite ($M_s=0.85\times10^5$emu/kg) rather than iron.

Therefore, the general guides in using the magnetic material (type and wt% concentration) in EcoMag are the following:

a) Use the smallest possible wt% concentration of magnetic material which meets the "MSA criterion" and the "floating criterion" for a desirable EcoMag's "degree of cohesiveness".

b) Use the smallest (with respect to magnetite and iron) amount of ferrites if EcoMag is going to be used in "low energy seas" (low "degree of cohesiveness" is needed) and largest amount in "high energy seas" (high "degree of cohesiveness" is needed), assuming that the "MSA criterion" and the "floating criterion" are met.

### 3. Raw materials and production of EcoMag

### 3.1 Raw materials

The raw materials to produce the final product (EcoMag) are divided into two categories:

a) The raw materials for the porous matrix (essentially non-magnetic) component
b) The raw materials for the magnetic material component

### 3.1.1 Raw materials for the porous matrix component

The raw materials for the porous matrix component of EcoMag are completely of inorganic nature. The physical properties of the raw materials for the porous matrix component of EcoMag (processed final product) are almost completely different than that of the starting raw materials (pre-processed material).

The raw materials for the porous matrix component are metal oxides/silicates of silicon (Si), aluminum (Al), potassium (K), sodium (Na), iron (Fe), calcium (Ca), magnesium (Mg) and other metallic traces, in the form of pure components and/or in the form of processed mixtures, and/or naturally occurring mixtures/minerals (for example silicates/oxides/carbonates), in the crystalline and/or amorphous state. The raw materials are mixed with a small amount of foaming agents (usually inorganic compounds). In the cases where naturally occurring mixtures/minerals are used as raw materials, the foaming agents exist naturally in the raw materials, usually in the form of water ($H_2O$). The foaming agent is very important in order to promote porosity in the final product.

The best candidate raw material for the porous matrix component is a naturally occurring mineral known as Perlite. Perlite is not a trade name but a generic term for a naturally occurring silicous glassy rock originating from volcanic lava. Perlite is an abundant mineral occurring in many parts of the world and its price is extremely low (typically, FOB $40/ton). Perlite has the property when heated to a suitable point in its softening range, to expand from four to twenty times its original volume producing a porous matrix (expanded Perlite) material. This expansion is due to the presence of two to six percent combined water (foaming agent) in the crude Perlite rock. When quickly heated to above (870°C), the crude rock pops in a manner similar to popcorn as the combined water vaporizes and creates countless tiny bubbles (pores) which account for the amazing light weight and other exceptional physical properties of expanded Perlite. Since Perlite is a form of natural glass, it is classified as chemically inert and has a pH of approximately 7.

### 3.1.2 Raw materials for the magnetic material component

The raw materials for the magnetic material component are iron (Fe) metal and/or iron alloys (containing at least 50 wt% Fe), Iron(II) Oxides ($FeO_x$, x is about 1), Iron(III) Oxides ($\gamma$-$Fe_2O_3$ maghemite, $\alpha$-$Fe_2O_3$ hematite), Iron Hydroxides ($Fe(OH)_2$ or $Fe(OH)_3$), $Fe_3O_4$ magnetite, Ferrites (such as Sr-ferrite and Ba-ferrite), other Iron, Cobalt and Nickel-based metallic alloys (such as RE-Fe(Co,Ni)-B(C), RE-Co(Fe,Ni) alloys, where, RE=La, Ce, Pr, Nd, Sm, Y, Dy, Tb, Gd, Eu, Yb, Ho). From the final cost point of view, Fe, $\gamma$-$Fe_2O_3$ maghemite, $Fe_3O_4$ magnetite, Sr-ferrite, Ba-ferrite, other ferrites, and/or mixtures of them are the most suitable. Magnetic metal alloys containing RE metals may be used only in special occasions where cost is not an important issue. Magnetite ($Fe_3O_4$) and other iron oxides occur as natural minerals and their cost is very low. The price increases when metal iron and ferrites are used. The most suitable magnetic material component is a mixture of ferrites, magnetite and iron particles, depending on the desired final properties of EcoMag, exactly as presented in the previous paragraphs 2.2 and 2.3.

Usually, the magnetic material component in EcoMag (final product) is not much different from the original raw magnetic material, which means that the raw magnetic materials remain almost unaffected through the process of EcoMag production.

### 3.2 Production process of EcoMag

There are two processing methods for the production of EcoMag, the "processing and mixing method" and the "pre-mixing and processing method". The "processing and mixing method" is used independent of the nature of the magnetic material used (iron oxides and/or ferrites and/or metallic iron and/or RE-based metallic alloys). The "pre-mixing and processing method" is limited to the cases where the nature of the magnetic material is in the form of iron oxides and/or ferrites and/or metallic iron. The reason is because, RE-based metallic alloys are very sensitive to oxidation during the high temperature processing of EcoMag and their intended good magnetic properties deteriorate loosing their effectiveness.

Both methods are very simple and cost effective. The employment of each method depends only on how one plans to use the final product (EcoMag). If EcoMag is going to be produced and applied in situ on the oil spill combating vessel, the "pre-mixing and processing method" is the most suitable because, the pre-mixed and ready for processing material will be already stored on board and the mixing process can be avoided gaining time which is crucial in combating oil spills. Also, It is easier and space saving to store a pre-mixed raw material than EcoMag itself. EcoMag could need a 4 - 40 times more space to store because of its lower density. When the response time is not of a major consideration, for example, in regular EcoMag production, both methods may be used and EcoMag can be stored on the ground for further managing.

### 3.2.1 Processing and mixing method

This production method is based on the separate processing of the raw material to produce the porous matrix component and its subsequent mixing with the desired amount of the magnetic material component with the use of a binder (glue).

The processing of the raw material employs the drying of the material to remove the moisture at temperatures between 100 and 800°C, followed by a high temperature treatment at 800 - 1300°C. Usually, and especially when Perlite is used, flash (quick) heating is applied in order to achieve a porous matrix with very low apparent density. Typically, Perlite particles are flash heated on a direct flame (gas or petroleum flame) at 800 to 1300°C in an "expansion reactor", and immediately removed pneumatically and/or by other methods. Usually, the "expansion reactor" is a vertical reactor tube, with Perlite (or other raw material) particles falling by gravity from the top on a regulated flame which is located in the bottom of the tube. Perlite pops and the light product (expanded Perlite) is removed pneumatically from the top of the reactor and stored for further processing.

The "expansion reactor" can also be an inclined rotating reactor tube in which Perlite (or other raw material) particles are fed from the top entry and is transferred/guided towards the lower entry where a burner flame expands the Perlite into a light product which is consequently removed pneumatically and stored for further processing.

Mixing is done in order to achieve bonding of the magnetic material in the final product (EcoMag). This can be done with the utilization of small quantities of epoxy/acrylic and/or other resins at low temperatures (<100°C), or of polyethylene/polypropylene and/or other polymers at medium temperatures (100 - 300°C), or of inorganic materials such as silicates/borates/phosphates and/or other glassy materials at high temperatures (300 -1300°C).

### 3.2.2 Pre-mixing and processing method

This production method is based on the pre-mixing of both raw materials (matrix and magnetic raw materials components) at temperatures up to 800°C and the subsequent processing at high temperatures (800 - 1300°C) to directly produce EcoMag. In some cases, depending on the nature of the matrix raw material, a small amount of inorganic binder is added to the mixture in order to promote bonding of the magnetic material in the final product (EcoMag) during the process. The mixture of the raw materials (with/without binder) is processed in a "vertical reactor tube" or in an "inclined rotating reactor tube" as described above in paragraph 3.2.1.

**4. Deployment of EcoMag, magnetic separation methods and oil recovery**

**4.1 Deployment of EcoMag**

The deployment of EcoMag could take place by spraying EcoMag particles on the oil spill by many ways (vessels, airplanes, helicopters, pneumatic systems, etc) which are presently used to deploy the chemical dispersants and other oil spill combating materials. EcoMag can be deployed from existing EcoMag storages on the ground and/or on vessels. EcoMag could also be produced and pneumatically applied in situ on the oil spill combating vessel itself.

**4.2 Magnetic separation methods**

Magnetic separation of the EcoMag carrying the sorbed oil can be done by a batch magnetic separation method and a continuous magnetic separation method. In both methods, the idea is to magnetically attract the "EcoMag-oil" magnetic mixture by a magnetic system, remove the mixture from the surface of the waters (or of the ground or other solid surface) and store it in a storage container for further oil recovery or use. A combination of both magnetic separation methods could be used to increase the efficiency of oil spill cleaning operation.

**4.2.1 Batch magnetic separation method**

This method is similar to the magnetic methods used employing electromagnets to transfer iron-based scrap metals in the junk yards or in foundries. In the place of an electromagnet one can use a magnetic system made of strong permanent magnets (Nd-Fe-B, Sm-Co, ferrites or AlNiCo). The magnetic separation process consists of lowering the magnetic head of the system (with the use of a crane) on the top of the magnetic mixture (EcoMag with sorbed oil), lifting it and store it in a storage container. The procedure is repeated many times until all the mixture is removed. The efficiency of this system depends on the surface area of the magnetic head and the number of systems used.

**4.2.2 Continuous magnetic separation method**

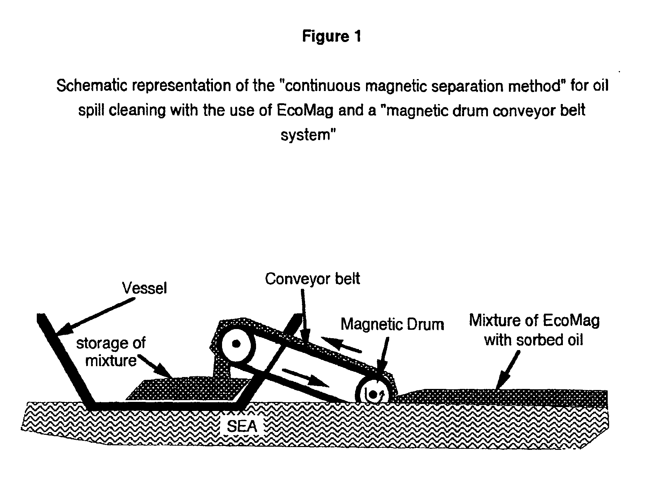

This method is similar to the methods used in enriching iron ores in the mining industry and in magnetic separations of unwanted ferromagnetic materials from wool, tobacco, tea, china clay, liquid coolants, and other solids and liquids. This magnetic separation system is based on a magnetic drum and a conveyor belt as shown in Figure 1. In the case of a waterborne oil spill, EcoMag is applied on the oil spill and floats with the sorbed oil. The magnetic drum, fixed on a vessel, can be lowered partly into the water level, attracts the magnetic mixture which is transferred by the moving conveyor belt on to the vessel and left to fall into a storage container. As the recovery process continues the vessel moves towards the oil spill front in a velocity almost equal to the surface velocity of the conveyor belt. This process can proceed continuously until all the mixture is removed. The efficiency of this system is higher than that of the batch type, and depends largely on the axial length of the magnetic drum and the number of the systems used.

**4.3 Oil recovery**

The oil can be recovered from the "EcoMag-oil" mixture by centrifugation or solvent extraction. The mixture could also be used directly as a fuel (for example in cement factories) producing inorganic ash containing earth constituents. The ash can be used in the cement products or it can be disposed off in the fields.

**Claims**

1. Particulate composite material for absorbing oil from oil spills, the material comprising a porous low-density mineral component and a magnetic component in an amount sufficient to make the particulate material magnetically recoverable from an oil spill, the material being **characterised by** an apparent density of 323 kg/m$^3$ to 25 kg/m$^3$.

2. Particulate composite material according to claim 1 wherein the magnetic component is bonded with a binder to a matrix of the porous low-density mineral component.

3. Particulate composite material according to claim 2 wherein the binder is polyethylene or polypropylene or an epoxy/ acrylic resin.

4. Particulate composite material according to any preceding claim wherein the porous low-density mineral component is expanded perlite.

5. Particulate composite material according to any preceding claim wherein the magnetic material comprises iron oxides and/or ferrites and/or metallic iron.

6. Particulate composite material according to any preceding claim wherein the average particle size is between 0.2 mm and 20 mm.

7. Particulate composite material as claimed in any preceding claim further comprising absorbed oil.

8. Use of the material of claim 7 as fuel in cement production.

9. A method of making expanded particulate composite material for absorbing oil from oil spills, the method comprising flash heating precursor material comprising unexpanded perlite and a magnetic component in an amount sufficient to make the resulting expanded particulate composite material magnetically recoverable from an oil spill and having an apparent density of 323 kg/m$^3$ to 25 kg/m$^3$.

10. A method according to claim 9 wherein the precursor material is flash heated in a vertical reactor tube or an inclined rotating reactor tube to a temperature in the range 800°C to 1300°C.

11. A method of absorbing oil from an oil spill, the method comprising applying particulate composite material as claimed in any of claims 1 to 6 to the oil spill, allowing said material to absorb oil from the oil spill, and magnetically recovering the resulting oil-containing material.

12. A method according to claim 11 wherein the oil spill is waterborne and said oil-containing material is recovered by a rotating magnetic drum.

**Patentansprüche**

1. Partikuläres Composite-Material zum Absorbieren von ausgelaufenem Öl, wobei das Material eine poröse Mineralkomponente mit geringer Dichte aufweist und eine magnetische Komponente in einer ausreichenden Menge, um das partikuläre Material aus einer Ölverschmutzung magnetisch rückgewinnbar zu machen, wobei das Material **gekennzeichnet ist durch** eine Schüttdichte von 323 kg/m$^3$ bis 25 kg/m$^3$.

2. Partikuläres Composite-Material nach Anspruch 1, wobei die magnetische Komponente mit einem Bindemittel an einer Matrix aus der porösen Mineralkomponente geringer Dichte gebunden ist.

3. Partikuläres Composite-Material nach Anspruch 2, wobei das Bindemittel Polyethylen- oder Polypropylen- oder ein Epoxy/Acrylharz ist.

4. Partikuläres Composite-Material nach einem der vorgenannten Ansprüche, wobei die poröse Mineralkomponente geringer Dichte geschäumter Perlit ist.

5. Partikuläres Composite-Material nach einem der vorgenannten Ansprüche, wobei das magnetische Material Eisenoxide und/oder Ferrite und/oder metallisches Eisen aufweist.

6. Partikuläres Composite-Material nach einem der vorgenannten Ansprüche, wobei die mittlere Partikelgröße zwischen 0,2 mm und 20 mm beträgt.

7. Partikuläres Composite-Material nach einem der vorgenannten Ansprüche, ferner aufweisend absorbiertes Öl.

8. Verwendung des Materials nach Anspruch 7 als Brennstoff in der Zementherstellung.

9. Verfahren zum Herstellen von geschäumten partikulärem Composite-Material zum Absorbieren von Öl von Ölverschmutzungen, wobei das Verfahren das Kurzzeit-Hocherhitzen von Präkursormaterial umfasst, das ungeschäumten Perlit aufweist und eine magnetische Komponente in einer ausreichenden Menge, um das resultierende, geschäumte partikuläre Composite-Material aus einer Ölverschmutzung magnetisch rückgewinnbar zu machen, wobei das Material eine Schüttdichte von 323 kg/m$^3$ bis 25 kg/m$^3$ hat.

10. Verfahren nach Anspruch 9, wobei das Präkursormaterial einem Kurzzeit-Hocherhitzen in einem Vertikalrohrreaktor oder in einem schrägen Drehrohrreaktor bei einer Temperatur im Bereich von 800° bis 1.300°C unterworfen wird.

11. Verfahren zum Absorbieren von Öl aus einer Ölverschmutzung, wobei das Verfahren das Aufbringen des partikulären Composite-Materials nach Anspruch 1 bis 6 auf das ausgelaufene Öl umfasst und man das Material Öl aus der Ölverschmutzung absorbieren läßt, sowie das magnetische Rückgewinnen des resultierenden Öl enthaltenden Materials umfasst.

12. Verfahren nach Anspruch 11, wobei die Ölverschmutzung wassergetragen ist und das Öl enthaltenden Material mit Hilfe einer magnetischen Drehtrommel rückgewonnen wird.

**Revendications**

1. Matériau composite particulaire pour absorber les hydrocarbures de nappes d'hydrocarbures, le matériau comprenant un composant minéral de faible densité poreux et un composant magnétique en une quantité suffisante pour rendre le matériau particulaire récupérable magnétiquement à partir d'une nappe d'hydrocarbures, le matériau **se caractérisant par** une densité apparente de 323 kg/m$^3$ à 25 kg/m$^3$.

2. Matériau composite particulaire selon la revendication 1, dans lequel le composant magnétique est lié avec un liant à une matrice du composant minéral de faible densité poreux.

3. Matériau composite particulaire selon la revendication 2, dans lequel le liant est le polyéthylène ou le polypropylène ou une résine époxy/acrylique.

4. Matériau composite particulaire selon l'une quelconque des revendications précédentes, dans lequel le composant minéral de faible densité poreux est la perlite expansée.

5. Matériau composite particulaire selon l'une quelconque des revendications précédentes, dans lequel le matériau magnétique comprend des oxydes de fer et/ou des ferrites et/ou du fer métallique.

6. Matériau composite particulaire selon l'une quelconque des revendications précédentes, dans lequel la taille moyenne des particules est comprise entre 0,2 mm et 20 mm.

7. Matériau composite particulaire selon l'une quelconque des revendications précédentes, comprenant en outre les hydrocarbures absorbés.

8. Utilisation du matériau de la revendication 7 comme combustible dans la production de ciment.

9. Procédé de fabrication d'un matériau composite particulaire expansé pour absorber les hydrocarbures de nappes d'hydrocarbures, le procédé comprenant le chauffage instantané d'un matériau précurseur comprenant de la perlite non expansée et un composant magnétique en une quantité suffisante pour rendre le matériau composite particulaire expansé résultant récupérable magnétiquement à partir d'une nappe d'hydrocarbures et ayant une densité apparente de 323 kg/m$^3$ à 25 kg/m$^3$.

10. Procédé selon la revendication 9, dans lequel le matériau précurseur est chauffé instantanément dans un tube de réacteur vertical ou un tube de réacteur rotatif incliné à une température dans la plage de 800 °C à 1300 °C.

11. Procédé d'absorption d'hydrocarbures à partir d'une nappe d'hydrocarbures, le procédé comprenant les étapes consistant à déposer le matériau composite particulaire selon l'une quelconque des revendications 1 à 6 sur la nappe d'hydrocarbures, laisser ledit matériau absorber les hydrocarbures à partir de la nappe d'hydrocarbures, et récupérer magnétiquement le matériau contenant des hydrocarbures résultant.

12. Procédé selon la revendication 11, dans lequel la nappe d'hydrocarbures est en suspension dans l'eau et ledit matériau contenant des hydrocarbures est récupéré par un tambour magnétique rotatif.

**Figure 1**

Schematic representation of the "continuous magnetic separation method" for oil spill cleaning with the use of EcoMag and a "magnetic drum conveyor belt system"

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5603983 A
- US 5035804 A
- WO 9817387 A